# EUROPEAN PATENT APPLICATION

(11) **EP 1 275 324 A1**
(43) Date of publication of application: **15.01.2003**
(21) Application number: 01500176.1
(22) Date of filing: 09.07.2001
(51) Int. Cl.: A47B 57/48, F16B 12/38

(54) **Device for connecting a shelf and a stile, particulary in a rack**

(71) Applicant: AR Sistemas, S.A., 48960 Galdacano, Vizcaya (ES)
(72) Inventor: Azcuénaga Uriarte, Esteban, 48009 Bilbao (Vizcaya) (ES)
(74) Representative: Ungria Lopez, Javier

(57) **Abstract**

A connecting device between a shelf (14) and a stile (13), that comprises a plate (1) and two connecting elements (5, 5', 6, 6', 12) emerging orthogonally from the plate (1), which are to penetrate through a perforation of the side (15) of a shelf (14) and through a perforation (16) of the stile (13), wherein
each connecting element (5, 5', 6, 6', 12) is comprised of flexible lugs (5, 5', 6, 6', 12) that define therebetween an axial passage (25) that ends in an opening (2, 3, 4) in the plate (1),
the outside wall (8, 10) of each lug (5. 5', 6, 6', 12) has a retaining element (26),
each fastening element (18) comprises a rod (18a) with at least a section wider than a narrowed section (25a) of the axial passage (25) , in such a way that the insertion of the rod (18a) in the axial passage (25) produces a separation of the lugs (5, 5', 6, 6', 12).

## Description

### TECHNICAL FIELD OF THE INVENTION

The present invention fits in the field of fastening systems for rack components, particularly in the sector of systems for connecting shelves to stiles in racks.

### PRIOR ART

For many years, there have been racks that consisting of vertical stiles in the form of angular profiles with a series of perforations, between which horizontal shelves are assembled with bent over sides that have perforations in their corners. In order to connect a shelf to the vertical stiles, the corners of the shelf fit in the inside surfaces of the profiles in such a way that the respective perforations in the corners of the shelves are made to coincide each one with perforations in each stile, in such a way that by means of screws that respectively pass through the perforations in the stiles and the perforations in the corners of the sides of the shelf, and complementary nuts, in such a way that when the screws are tightened, the shelves are connected to the stiles at the same time that the assembly is rigidified.

The need to screw the shelves to the stiles implies that, in this type of rack, the assembly or change of position of a shelf from one height to another requires quite a lot of time. In order to try to overcome this inconvenience, patent application WO-A-9811803 describes a connecting system without screws, between the vertical stiles and the shelves, that comprises angular plates with orthogonal projections that lock in the perforations of the shelves and of the stiles free of play. Although this system permits assembly of the racks in very little time, it has the inconvenience that, since the projections of the angular plate are adapted to the dimensions of the perforations of the stiles and of the shelves, the locking thereof requires quite a bit of force, for example by means of hammering, thus necessarily producing deformation of the projections in such a way that the unlocking thereof, for example, when it is desired to change the position of a shelf from one height to another, cannot be done rapidly and it requires quite a bit of force and involves a substantial risk that the projections are damaged and cannot be used again.

### DESCRIPTION OF THE INVENTION

The purpose of the present invention is to overcome the inconveniences of the above-mentioned conventional connecting systems, by means of a connecting system that permits the coupling of shelves of stiles rapidly and firmly without the need to apply substantial force, as well as the uncoupling of shelves rapidly, easily, without requiring much force and without necessarily implying the unserviceableness of the connecting elements once they have been uncoupled.

The invention achieves this purpose by means of a connecting device between a shelf that comprises a side with at least a perforation, and a stile that comprises at least a perforation, particularly in a rack, whose device comprises at least a plate and at least two connecting elements emerging orthogonally from the plate which are to penetrate through at least a perforation of the side of the shelf and at least a perforation of the stile, and respective fastening elements in order to fasten the connecting elements in the perforations, wherein
each connecting element is comprised of at least two flexible lugs whose inside walls define therebetween an axial passage that ends in an opening in the plate,
the axial passage has at least a narrowed sectioned narrower than an extension of the opening,
the outside wall of each lug has a retaining element which is to be retained in an opposite side of one of the perforations, and
each fastening element, that can be, for example, a rivet, has a head with a section larger than the opening in the plate, from whose head a rod emerges, a rod that has at least a section wider than the narrowed section of the axial passage, in such a way that when the rod is inserted under pressure in the axial passage, a separation is produced towards the outside of the lugs in such a way that the plate is immobilized in the perforations by said retaining elements and said head.

The shape of the lugs permits easy insertion thereof in the perforations of the stiles and of the shelves, along with a firm connection. In turn, when a shelf is to be disassembled, it suffices to remove the fastening element so that the lugs, due to their flexibility, return to their free position and, therefore, they can be easily removed from the perforations of the stile and of the shelf.

Preferably, the plate is an angular piece in which the openings are arranged at right angles, in such a way that the plate has a first corner with a first opening from which at least two lugs extend in order to be inserted in a bottom perforation of the stile, a second corner with a second opening from which at least two lugs extend in order to be inserted in a top perforation of the stile, and a third corner with a third opening from which at least two lugs extend in order to be inserted in a perforation in the side of the shelf. In this preferred embodiment, each one of the openings in which the respective axial passages end has a section that comprises two straight sections connected by respective semicircular sections, and each one of the axial passages has a section complementary to the section of each one of the openings, whereas the rod of each fastening element has a section complementary to the section of each axial passage. Preferably, in this embodiment, the axial passages that respectively end in the openings in the plates are defined respectively between two lugs face to face whose inside walls have a straight cross section, lugs inserted in correspondence with the straight sections connected by the semicircular sections of the openings. Additionally, each one of the axial passages that respectively end in the first opening and in the third opening may be defined alternatively or furthermore between two lugs face to face whose inside walls (7) have a curved cross section, lugs inserted in correspondence with the semicircular sections that connect the straight sections of the opening in which the two straight lugs are arranged.

On the other hand, at least two of the lugs may be provided on their inside walls with respective horizontal projections that lock in a perimetric recess of the rod of the fastening element when the fastening element is inserted in the axial passage.

According to an embodiment of the invention, the retaining element may be comprised of an outside retaining section of each lug that extends from the opening towards the free end of the progressively protruding lug, at least when the fastening element is inserted in the axial passage, of at least a part of the axial projection of the perimeter of the opening in the plate towards an area of maximum protrusion. In this embodiment, the retaining element may comprise an outside thickened part of the lug, and the area of maximum protrusion of the retaining section of the retaining element may be located in an area of maximum thickness of the lug, said area of maximum thickness coinciding with the area of maximum protrusion. For this reason, the thickness of the lug may increase progressively along the retaining section towards the area of maximum thickness of the lug and the narrowed section of the axial passage defined between the inside walls of the lugs may also be arranged at the end of a first inside section of each inside wall that progressively penetrates, at least when the fastening element is inserted in the axial channel, towards the inside of the axial passage from the opening into the plate.

At least part of the lugs can have an introduction section that extends from the area of maximum protrusion of the retaining section of the retaining element towards the free end of the lug, said introduction section being oriented in a direction contrary to the direction of the retaining section. Especially in the straight cross section lugs, the introduction section has a thickness decreasing from the area of maximum protrusion in direction to its free end, whereas, on the curved cross section lugs, each lug can have a thickness at least partially uniform, and can also have the introduction section in such a way that at least the inside edge of the free end of the lug is pressed against the fastening element when the fastening element is inserted in the axial channel, in such a way that the narrowed section of the axial passage is between the free ends of at least two lugs.

In order to facilitate the removal of the fastening element, this element may be provided in its head with a side removal recess, in such a way that, in order to remove the fastening element from the axial passage, it suffices to introduce the tip of a tool, for example of a screwdriver, in the side recess and then pry with the tool.

In an embodiment of the invention, the device comprises two symmetric plates, connected to each other by at least a flexible connecting element, in such a way that each plate is insertable by its connecting elements in perforations of sections of a stile with a profile section and of the side of the shelf, perforations adjacent to respective corners of the stile and of the shelf.

Preferably, the elements that constitute the connecting device are manufactured out of plastic materials in a known manner.

### BRIEF DESCRIPTION OF THE FIGURES

Embodiments of the invention based on the figures will be described hereinafter wherein
figure 1 is a schematic side sectional view that shows an embodiment of a connecting element that emerges from an assembly plate;
figure 2 is a schematic view which shows how the connecting element is inserted in the connecting element shown in figure 1;
figure 3 is a schematic profile view of a connecting device in the form of a double plate according to an embodiment of the invention, arranged in a stile and in a shelf of a rack;
figure 4 is a front raised view of the double plate shown in figure 3 before it has been assembled in the rack;
figure 5 is a rear raised view of the double plate shown in figure 3;
figure 6 is an enlarged view of the area (I) shown in figure 4;
figure 7 is a top plan view of the double plate shown in figure 3 before it has been assembled;
figure 8 is an enlarged view of the area (II) shown in figure 5;
figure 9 is a view along line A-A of figure 8;
figure 10 is a view along line B-B of figure 8;
figure 11 is an enlarged view of the area (III) shown in figure 5;
figure 12 is a view along line C-C of figure 11;
figure 13 is a view along line D-D of figure 11;
figure 14 is a bottom plan view of an embodiment of a fastening element;
figure 15 is a view along line E-E of figure 14;
Figure 16 is a view along line F-F of figure 14.

The numerical references whose meaning is specified hereinafter appear in the figures:
- 1, 1': assembly plate
- 2: first opening in the plate 1
- 3: second opening in the plate 1
- 4: third opening in the plate 1
- 5, 5': curved lug
- 6, 6': straight lug
- 7: inside wall of the lug 5, 5'
- 8: outside wall of the lug 5, 5'
- 9: inside wall of the lug 6, 6', 12
- 10: outside wall of the lug 6, 6', 12
- 11: projection in the lug 6, 6', 12
- 12: straight lug
- 13: stile of the rack
- 14: shelf
- 15: side of the shelf 14
- 16: perforation in the stile 13
- 17: perforation in the side 15
- 18: fastening element
- 18a: rod of the fastening element 18
- 19: perimetric recess in the rod 18a
- 20: head of the fastening element 18
- 21: side recess in the head 20
- 22: first area of the plate 1 where the openings 2, 3 are located
- 23: second area of the plate 1 where the opening 4 is located
- 24: connecting bridge between the plates 1, 1'
- 25: axial passage between the lugs 5, 5', 6, 6', 12
- 25a: inside narrowed section of the axial passage 25
- 26: area of maximum protrusion of the retaining element
- 26a: retaining section of the retaining element
- 26b: introduction section of the retaining element
- 27a: first section of the inside wall of the lug
- 27b: second section of the inside wall of the lug

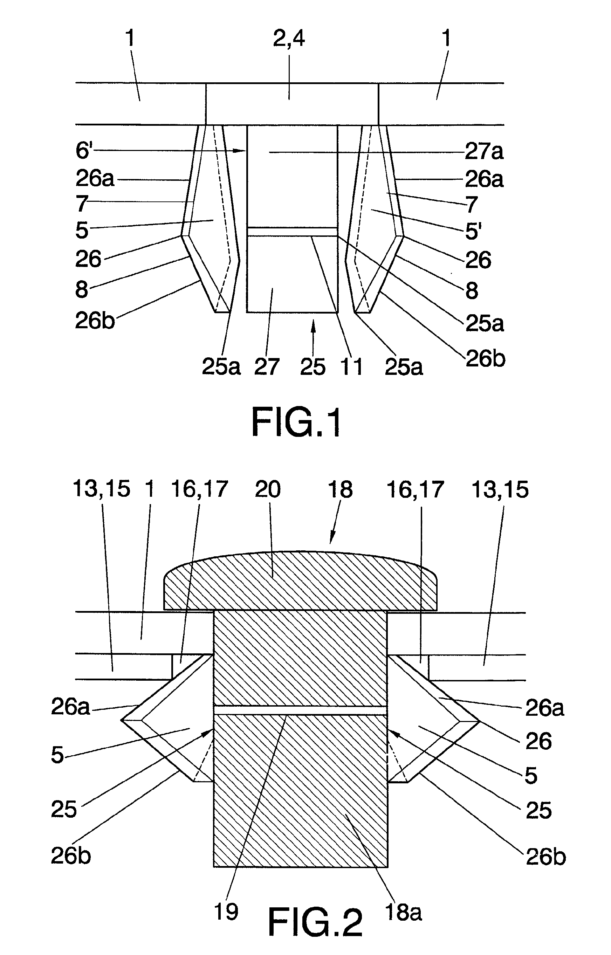

Figure 1 shows that the body of a plate (1) has an opening (2, 4) which an axial passage (25) ends in. The axial passage is delimited between two lugs (5, 5') face to face, whose inside walls (7) have a straight cross section, and a first straight cross section lug (6, 6'), in turn facing a second lug, also with a straight cross section (not shown in figure 1).

The outside walls (8) of the lugs (5, 5') respectively have a retaining section (26a) that extends outward from the axial projection of the opening (2, 4) up to an area of maximum protrusion (26), and an introduction section (26b) that extends from the area of maximum protrusion (26) up to the free ends of the lug (5, 5') with an axial orientation contrary to the one of the retaining section (26a) in such a way that the free ends of the two lugs (5, 5') define therebetween a first narrowed area (25a) of the axial channel (25). The sections (26a) and (26b) of the lugs (5, 5') have a substantially uniform thickness.

On the other hand, the lug (6, 6') whose inside walls have a straight cross section and logically the other lug whose inside walls have a straight cross section not shown in figure 1, has an inside wall with a first section (27a) that extends from the edge of the opening (2, 4) towards the inside of the axial channel (25) up to a second narrowed area (25a) of the axial channel (25), and with a second section (27b) that extends outward from said second narrowed area (25a). In the embodiment shown in figure 1, the curved cross section lugs (6, 6') also have a projection (11) that emerges towards the inside of the axial passage (25).

Figure 2 schematically shows how the fastening element (18), when it is inserted in the axial passage (25) actuates the assembly of the lugs (5, 5') and the rear surface of the plate (1) in order to connect a side stile (13) or a side (15) of a shelf to the plate (1). This figure shows that the lugs (5, 5'), when the rod (18a) is inserted at the narrowed area (25a) of the axial channel defined between the free ends of the lugs (5, 5'), separate in such a way that the areas of maximum protrusion (26) of the respective lugs (5, 5') are even more separated. In turn, the fastening element (18) is immobilized by its head (20) and by the free ends of the lugs (5, 5'). Additionally, the insertion of the fastening element (18) also firstly causes a separation of the lugs (6, 6') until the projections (11) of said lugs lock in the perimetric recess (19) of the rod (18a), in such a way that the fastening element (18) is also immobilized by such locking. In this way, the stile (13) or the side (15) is immobilized against the rear surface of the plate (1) by the actuation of the lugs (5, 5', 6 and 6') and of the fastening element (18).

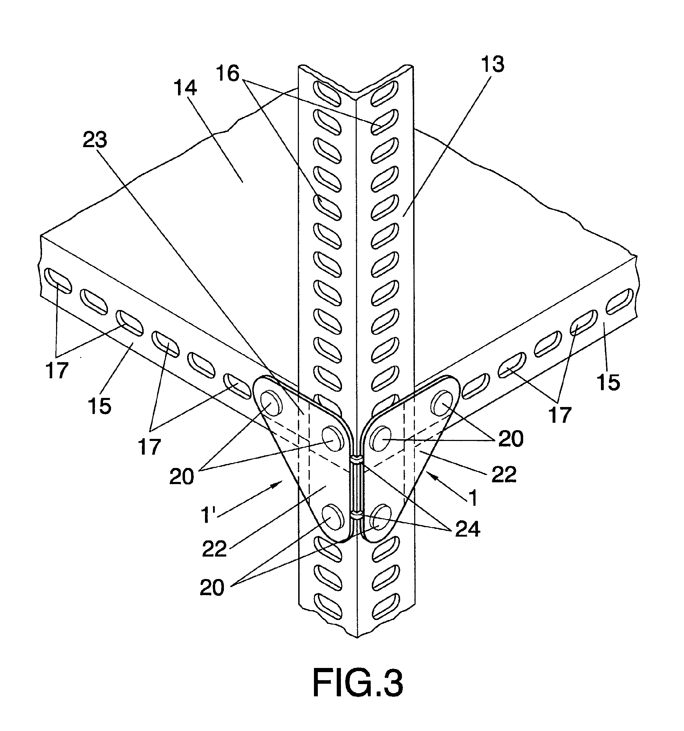

Figure 3 illustrates how a connecting device according to an embodiment of the invention is assembled in a stile (13) with a profile section and a shelf (14), which are in themselves conventional, of a rack. Hence, the device comprises two symmetric plates (1, 1') connected by bridges (24) and arranged orthogonally one with respect to the other in such a way that the bridges clamp the outside corner of the profile of the stile (13) whereas the bodies of the plate are abutted against the respective sides (15) of the shelf and against the outside surfaces of the respective branches of the profile of the stile (13). Furthermore, the heads (20) of the fastening elements of the type illustrated in figure 2 can be seen. The plates (1, 1') are substantially triangular in such a way that the plates (1, 1') are connected to the sides (15) of the shelf (14) and to the stile (13) each one by means of three points arranged at right angles in such a way that two of the connecting points are aligned vertically in a first area of the plates (1, 1') and another one of the points is arranged in a second area (23) of said plates and aligned in turn with the top connecting point of the area (22). One of said points corresponds to a fastening of a plate (1, 1') only in a perforation (16) of the stile (13), another one corresponds to the fastening of the plate (1, 1') only in a perforation (17) of a side (15) of the shelf (14) and another one to the fastening in the fastening of the plate in a hole (16) of the stile (13) and of a hole (17) of said side (15).

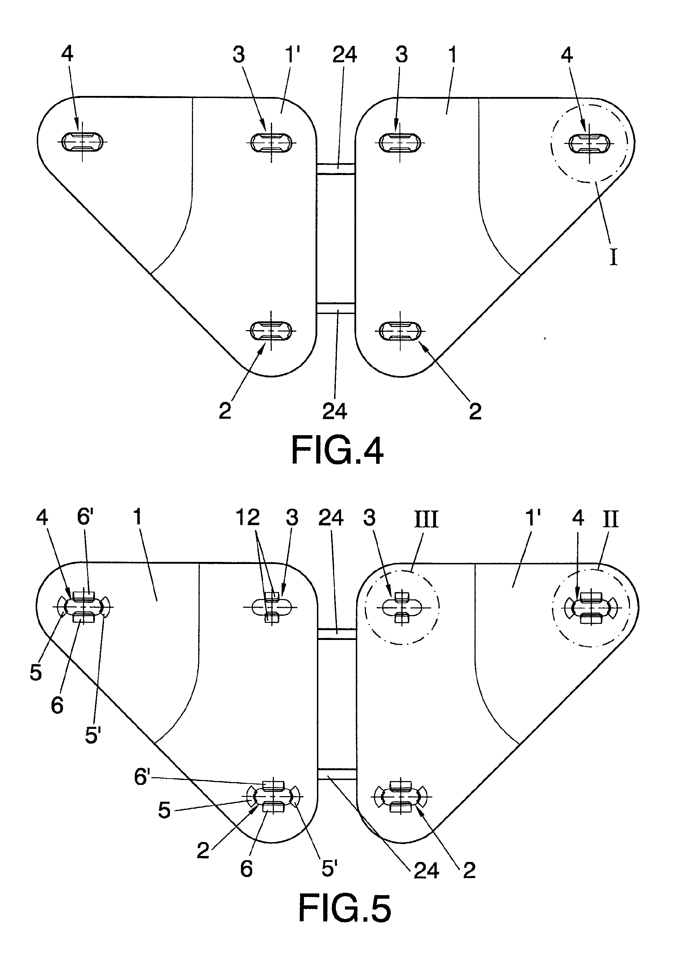

Figure 4 shows the double plate (1, 1') of figure 3 before it has been assembled. Each one of the plates (1, 1') has a bottom opening (2) for the fastening thereof only to the stile, a first top opening (3) for the assembly thereof in the stile as well as in the side of the shelf, and a third opening for the assembly thereof only in the side of the shelf.

Figure 5 shows the arrangement of the lugs (5, 5', 6 and 6') in the respective openings (2, 3 and 4). Hence, each one of the openings (2) and (4) has a pair of straight cross section lugs (6) face to face and a pair of lugs (5, 5') face to face whose inside walls (7) have a curved cross section whereas each one of the openings (3) only has a pair of lugs (12) whose inside walls (7) have a straight cross section. The lugs (5, 5', 6, 6' and 12) emerge from areas that surround the edges of the openings (2, 3 and 4) on the rear surfaces of the plates (1, 1').

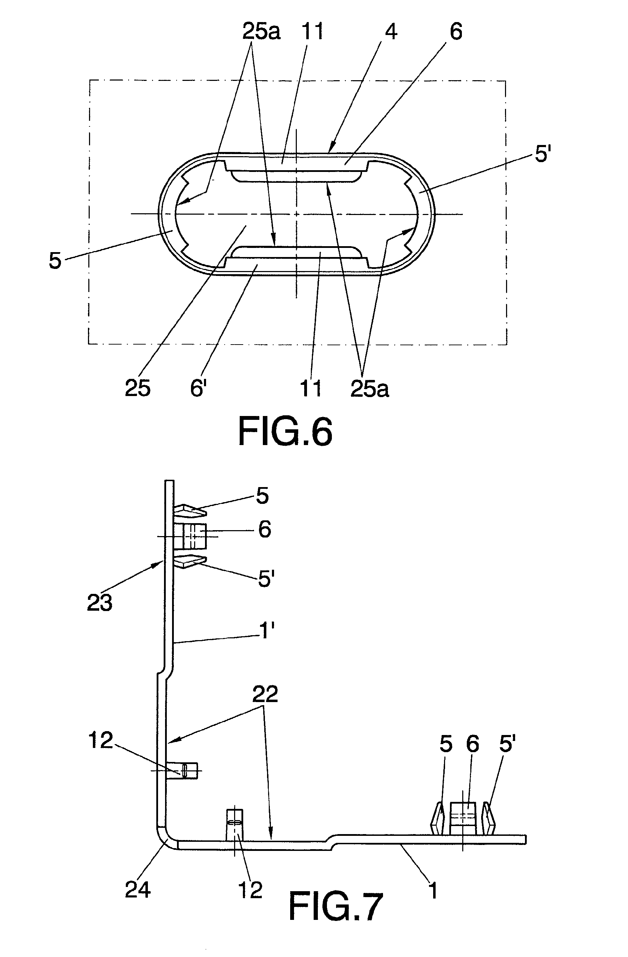

Figures 6, 7 and 8 show in more detail the arrangement of the lugs (5, 5', 6 and 6') arranged in the opening (4) of the plate (1). This arrangement is similar to the one of the opening (2). It can be seen that the opening (4) has two curved sections connected by straight sections, in such a way that the curved section lugs (5, 5') are arranged in said curved sections whereas the straight cross section lugs (6, 6') are arranged in said straight sections of the opening (4) and are provided with respective horizontal projections (11).

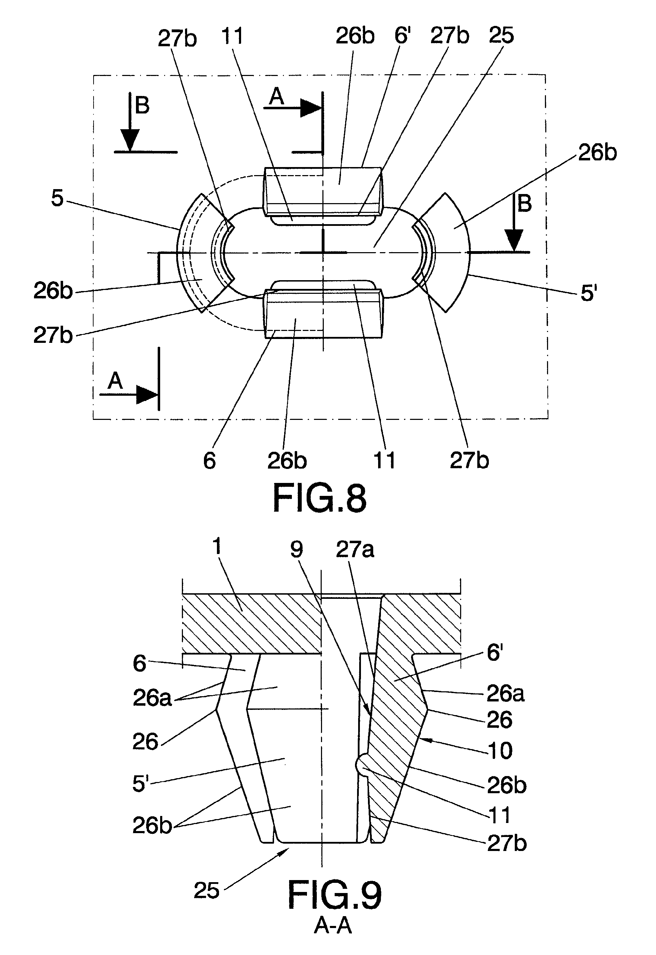

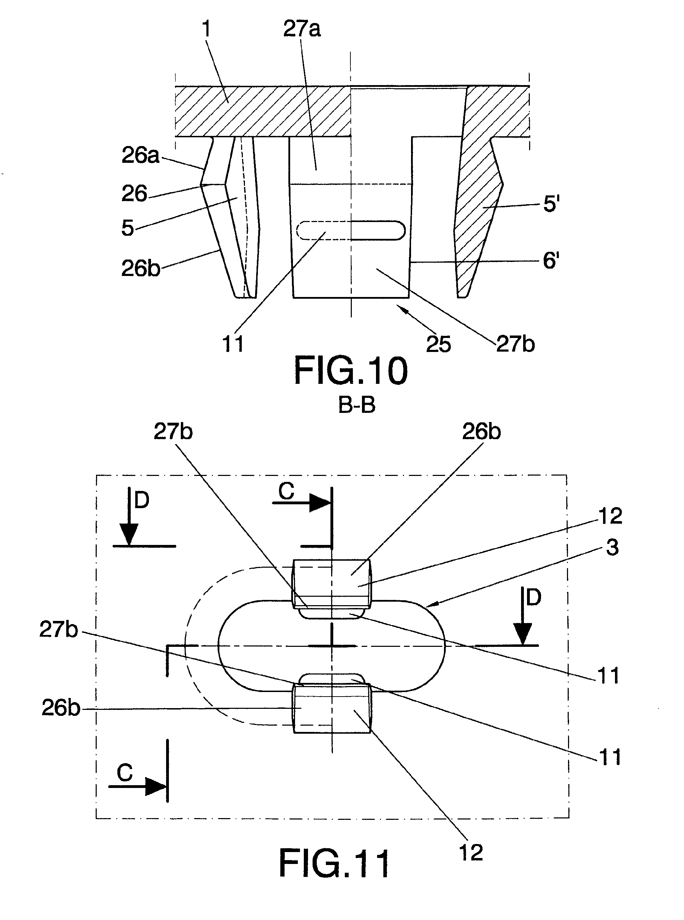

Figures 9 and 10 illustrate in more detail the lugs (5, 5', 6 and 6') shown in figures 5 to 8, the numerical references given therein having the same meanings as the ones that appear represented more schematically in figure 1. It can be seen that the outside walls of the lugs (6, 6') respectively have a retaining section (26a) in their outside wall (10) and a first section (27a) of their inside wall (9) that define therebetween, due to the contrary orientations of said sections (26a, 27a), a thickness of the lug (12) that increases progressively up to a thicker area coinciding with the area of maximum protrusion (26). Following the sections (26a, 27a), the lugs (12) have sections (26b, 27b) that converge towards the free ends of the lugs (12), in such a way that the thickness of the lug diminishes again.

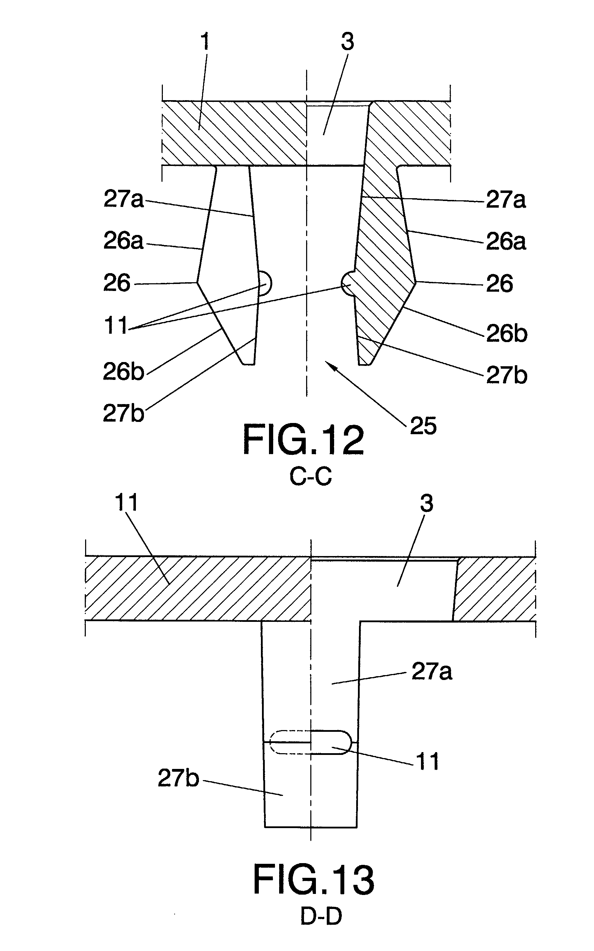

Figures 11, 12 and 13 show in more detail the lugs (12) whose inside walls have a straight cross section, arranged in the second opening (3) of the plate (1) and that also appear in figures 5 and 7. As it can be seen, the lugs (12) have a structure similar to the one of the lugs (6,6') although they are narrower than the lugs (6, 6'). The numerical references that appear in figures 11 and 12 are similar to those that appear in figures 1, 9 and 10.

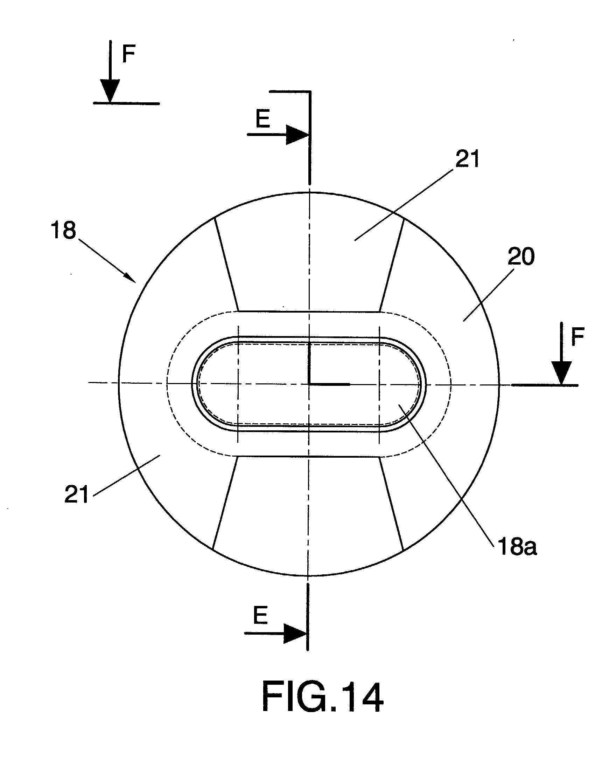

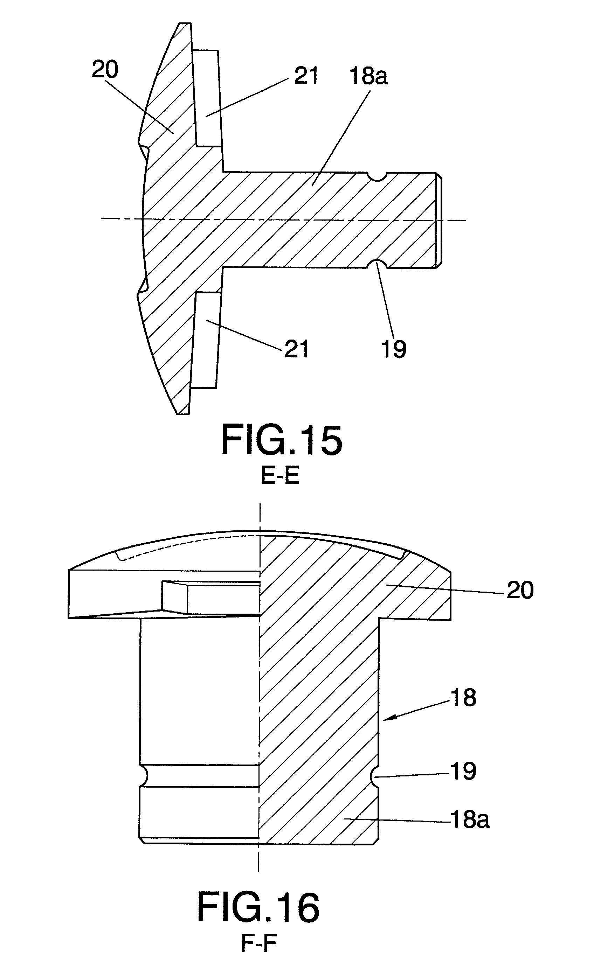

Figures 14 to 16 illustrate in more detail the fastening element (18) that in this embodiment has a shape very similar to that of a rivet. It can be seen that the head (20) with a circular cross section of the fastening element (18) has two side recesses (21) that serve to insert and pry with a flat element, such as for example the tip of a screwdriver, a coin or a knife, when the fastening element is to be removed from the openings of the plate. In turn, the rod (18a) that emerges from the head (20) has a shape complementary to that of the openings (2, 3 and 4) shown in the preceding figures, and likewise a perimetric recess (19) in which the projections of the lugs (6, 6' or 12) lock.

In order to use the connecting device whose elements have been previously described in the assembly of a conventional rack comprised of shelves (14) and stiles (13), the shelf (14) is arranged orthogonally in the inside angle of the profile of the stile (13) in such a way that a perforation (17) and a second perforation more towards the end of the side (15) of the shelf coincide with a perforation (16) of the stile (13), that is located at the height at which the shelf is to be placed in the rack.

Then, the first plate (1) is assembled by fitting the lugs (5, 5', 6, 6') and the lugs (12) in the corresponding perforations of the stile (13) and of the side (15) of the shelf (14). In this way, the lugs (5, 5', 6, 6') that emerge around the first opening (2) of the plate (1) are inserted in a bottom hole (16) of the stile (13). The lugs (12) that emerge around the second opening (3) of the plate (1) are inserted in a top hole (16) of the stile (13) and in the coinciding hole (17) of the side (15) of the shelf (14), whereas the lugs (5, 5', 6, 6') that emerge around a third opening (4) of the plate (1) are inserted in a second perforation (17) of the side (15) of the shelf (14).

Then, a fastening element (18) is inserted under pressure through each one of the openings (2, 3 and 4) in such a way that the lugs (5, 5', 6, 6' and 12) open. Upon opening, the lugs (5, 5', 6, 6') corresponding to the first opening immobilize the plate (1) in the stile, the lugs (12) grip the plate (1), the stile (13) and the side (15) of the shelf (14), whereas the lugs (5, 5', 6, 6') corresponding to the third opening immobilize the plate (1) in the side (15) of the shelf (14).

Above all for the assembly of the top and bottom shelves that provide the basic rigidity of the structure of a rack, but also for the assembly of shelves capable of supporting heavy weights, the second plate (1') is then applied in a similar manner in the adjacent corner of the side (15) of the shelf (14) and of the stile (13). In this way, the corners (4) of each shelf can be firmly connected to the four stiles that comprise the vertical structure of a rack.

## Claims

1. A device for connecting a shelf (14) that comprises a side (15) with at least a perforation (17) and a stile (13) that comprises at least a perforation (16), particularly in a rack, whose device comprises at least an assembly plate (1) and at least two connecting elements (5, 5', 6, 6', 12) emerging orthogonally from the plate (1) which are to penetrate through at least a perforation of the side (15) of the shelf (14) and through at least a perforation (16) of the stile (13), and respective fastening elements (18) in order to fasten the connecting elements (5, 5', 6, 6', 12) in the perforations (16, 17) **characterized in that**
each connecting element (5, 5', 6, 6', 12) is comprised at least by two flexible lugs (5, 5', 6, 6', 12) whose inside walls (7, 9) define therebetween an axial passage (25) that ends in an opening (2, 3, 4) in the plate (1),
the axial passage (25) has at least a narrowed section (25a) narrower than an extension of the opening (2, 3, 4),
the outside wall (8, 10) of each lug (5, 5', 6, 6', 12) comprises a retaining element (26, 26a) which is to be retained in a side opposite one of the perforations (16, 17),
each fastening element (18) has a head (20) with a section larger than the opening (2, 3, 4) in the plate (1), from whose head (20) emerges a rod (18a) that has at least a section wider than the narrowed section (25a) of the axial passage (25), in such a way that when the rod (18a) is inserted under pressure in the axial passage (25), a separation is produced towards the outside of the lugs (5, 5', 6, 6', 12) in such a way that the plate (1) is immobilized in the perforations (16, 17) by said retaining elements (26, 26a) and said head (20).

2. A device according to claim 1, **characterized in that** the openings (2, 3, 4) in the plate (1) are arranged at right angles, in such a way that the plate (1) has
a first corner with a first opening (2) from which at least two lugs (5, 5', 6, 6', 12) extend in order to be inserted in a bottom perforation (16) of the stile (13),
a second corner with a second opening (3) from which at least two lugs (5, 5', 6, 6', 12) extend in order to be inserted in a top perforation (16) of the stile (13),
a third corner with a third opening (4) from which at least two lugs (5, 5', 6, 6', 12) extend in order to be inserted in a perforation in the side (15) of the shelf (14),
each one of the openings (2, 3, 4) which the respective axial passages (25) end in having a section that comprises two straight sections connected by respective semicircular sections, and
each one of the axial passages (25) having a section complementary to the section of each one of the openings (2, 3, 4), and
the rod (18a) of each fastening element (18) having a section complementary to the section of each axial passage (25).

3. A device according to claim 2, **characterized in that** the axial passages (25) that respectively end in the first opening (2), the second opening (3) and the third opening (4) are defined each one between two lugs (6, 6', 12) face to face whose inside walls (7) have a straight cross section, lugs inserted in correspondence with the straight sections connected by the semicircular sections of the openings (2, 3, 4).

4. A device according to claim 2 or 3, **characterized in that** each one of the axial passages (25) that respectively end in the first opening (2) and in the third opening (4) is defined between two curved lugs (5, 5') face to face whose inside walls (9) have a curved cross section, lugs inserted in correspondence with the semicircular sections that connect the straight sections of the opening (2, 3, 4) in which the two straight lugs (6, 6', 12) are arranged.

5. A device according to claim 1, 2, 3 or 4, **characterized in that** at least two of the lugs (6, 6', 12) have in their inside wall (9) respective horizontal projections (11) that lock in a perimetric recess (19) of the rod (18a) of the fastening element (18) when the fastening element is inserted in the axial passage (25).

6. A device according to claim 1, **characterized in that** the narrowed section (25a) of the axial passage (25) defined between the inside walls (7, 9) of the lugs (6, 6', 12) is located at the end of a first inside section (27a) of each inside wall (9) that progressively penetrates, at least when the fastening element (18) is inserted in the axial channel (25), towards the inside of the axial passage (25) from the opening (2, 3, 4) in the plate (1).

7. A device according to claim 1, **characterized in that** the retaining element (26, 26a) is comprised of an outside retaining section (26a) of each lug (5, 5', 6, 6', 12) that extends from the opening (2, 3, 4) towards the free end of the lug (5, 5', 6, 6', 12) progressively protruding, at least when the fastening element (18) is inserted in the axial passage (25), of at least a part of the axial projection of the perimeter of the opening (2, 3, 4) in the plate (1) towards the area of maximum protrusion (26).

8. A device according to claim 1 or 7, **characterized in that** the retaining element (26, 26a) comprises an outside thickening of the lug (5, 5', 6, 6', 12).

9. A device according to claim 7, **characterized in that** the area of maximum protrusion (26) of the retaining element (26, 26a) is located in an area of maximum thickness of the lug (6, 6', 12), said area of maximum thickness coinciding with the area of maximum protrusion (26).

10. A device according to claim 9, **characterized in that** the thickness of the lug (6, 6', 12) progressively increases along the retaining section (26a) towards the area of maximum thickness (26) of the lug (6, 6', 12).

11. A device according to claim 7, **characterized in that** the lug (5, 5') has a thickness at least partially uniform and **in that** it also has an introduction section (26b) that has an axial orientation contrary to the retaining section (26a) and that extends from the area of maximum protrusion (26) towards the free end of the lug (5, 5'), said axial orientation being such that in such a way that the narrowed section (25a) of the axial passage (25) is between the free ends of at least two lugs (5, 5') and, the inside edge of the free end of the lugs (5, 5') is pressed against the fastening element (18) when this fastening element is inserted in the axial channel (25).

12. A device according to claim 7, 8, 9, 10 or 11 **characterized in that** the lug (5, 5', 6, 6', 12) has an introduction section (26b) that extends from the area of maximum protrusion (26) of the retaining section (26a) of the retaining element (26, 26a) towards the free end of the lug (5, 5', 6, 6', 12), said introduction section (26b) being oriented in a direction contrary to the direction of said retaining section (26a) and **in that** the lug (5, 5', 6, 6', 12) emerging from the plate (1) has a decreasing thickness from the area of maximum protrusion (26) in the direction of its free end.

13. A device according to claim 1, **characterized in that** the head (20) of the fastening element (18) has at least a side recess (21) for removal.

14. A device according to claim 1, **characterized in that** it comprises two symmetric plates (1, 1') connected to each other by at least a flexible connecting element (24), in such a way that each plate (1, 1') is insertable by its connecting elements (5, 5', 6, 6', 12) in perforations (16, 17) of sections of a stile (13) with a profile section and of the side (15) of the shelf (14), perforations adjacent to respective corners of the stile (13) and of the shelf (14).
